**Europäisches Patentamt**

**European Patent Office**

**Office européen des brevets**

(11) Veröffentlichungsnummer: **0 172 453**
A2

# (12) EUROPÄISCHE PATENTANMELDUNG

(21) Anmeldenummer: **85109492.0**

(22) Anmeldetag: **27.07.85**

(51) Int. Cl.⁴: **B 60 R 22/02**

(30) Priorität: **18.08.84 DE 3430458**

(43) Veröffentlichungstag der Anmeldung:
**26.02.86 Patentblatt 86/9**

(84) Benannte Vertragsstaaten:
**DE FR GB IT SE**

(71) Anmelder: BAYERISCHE MOTOREN WERKE
Aktiengesellschaft
Postfach 40 02 40 Petuelring 130
D-8000 München 40(DE)

(72) Erfinder: **Märtz, Josef**
**Uhlandstrasse 2**
**D-8057 Eching(DE)**

(72) Erfinder: **Hochmuth, Karl-Heinz**
**Ostpreussenstrasse 10**
**D-8057 Eching(DE)**

(74) Vertreter: **Dexheimer, Rolf**
**Bayerische Motoren Werke Aktiengesellschaft Postfach**
**40 02 40 Petuelring 130 - AJ-31**
**D-8000 München 40(DE)**

(54) Gurtbringer in einem Kraftwagen.

(57) Gurtbringer in einem Kraftwagen zur Zuführung des
Sicherheitsgurtes in eine griffgünstige Position, wobei der
Gurtbringer als Baueinheit am Dachrahmen des Kraftwagens
montiert ist und eine von einem als Antrieb dienenden
Elektromotor in Fahrzeuglängsrichtung abragende Führungsschiene aufweist, in welcher ein nach unten ragender
Mitnehmerarm für das Gurtband, welcher an seinem freien
Ende eine Durchlauföffnung für das Gurtband aufweist, mit
seinem der Durchlauföffnung abgewendeten Ende geführt
ist und in welcher ein als Ketten-, Seil- oder Bandtrieb
ausgebildetes, mit dem Elektromotor und dem Mitnehmerarm gekuppeltes Treibglied aufgenommen ist, über welches
der Mitnehmerarm aus einer hinteren Stellung unter Mitführung des Gurtbandes in eine vordere Stellung verfahrbar ist.

EP 0 172 453 A2

## Gurtbringer in einem Kraftwagen

Die Erfindung betrifft einen Gurtbringer in einem Kraftwagen zur Zuführung des Sicherheitsgurtes in eine griffgünstige Position, mit einem Mitnehmerarm, der an seinem freien Ende eine Durchlauföffnung für das Gurtband aufweist und der mittels eines Elektromotors über ein mit diesem und dem Mitnehmerarm gekuppeltes Treibglied aus einer hinteren Stellung unter Mitführung des Gurtbandes in eine vordere Stellung verfahrbar ist.

Die hier verwendeten Bezeichnungen vorn, hinten und seitlich beziehen sich auf die Fahrtrichtung des Kraftwagens.

Bei einem bekannten derartigen Gurtbringer ( DE-PS 21 08 483) ist dessen Mitnehmerarm als hochkant stehendes, in Fahrzeuglängsrichtung verlaufendes Federstahlband ausgebildet, welches über ein Reibrad von dem Elektromotor angetrieben wird. Dieser Gurtbringer ist für zweitürige Kraftwagen vorgesehen und hinter den Türen in die Seitenwand des Passagierraumes dicht unter dem Fenster eingebaut, wohingegen der Elektromotor mit dem Reibrad unter dem Rückfenster untergebracht ist. Da für das Verfahren des den Mitnehmerarm für das Gurtband bildenden Federstahlbandes ein verhältnismäßig langer Bewegungshub erforderlich ist, damit einerseits das Gurtband in eine von den Insassen auf den Vordersitzen des Kraftwagens leicht erreichbare Stellung zwischen dem Sitz und der geschlossenen Tür gebracht wird und andererseits der Mitnehmerarm in seiner hinteren Stellung bis hinter die Tür zurückgezogen ist und daher das Ein- und Aussteigen bei offener Tür nicht behindert, ragt der Mitnehmerarm in seiner hinteren Stellung bis in den Bereich des Kofferraumes hinein. Für den Einbau des Gurtbringers ist daher ein verhältnismäßig hoher Änderungsaufwand am Fahrzeug erforderlich, es ergeben sich erhebliche Montageschwierigkeiten und ein nachträglicher Einbau ist kaum möglich.

Durch die Erfindung wird die Aufgabe gelöst, einen Gurtbringer der eingangs erwähnten Art zu schaffen, dessen Einbauen einen nur geringen Änderungsaufwand am Kraftwagen erfordert und der einfach und auch nachträglich montiert werden kann.

Dies wird gemäß der Erfindung dadurch erreicht, daß der Gurtbringer als Baueinheit am Dachrahmen des Kraftwagens montiert ist und eine von dem Elektromotor in Fahrzeuglängsrichtung abragende Führungsschiene aufweist, in welcher der nach unten ragende Mitnehmerarm mit seinem der Durchlauföffnung abgewendeten Ende geführt ist und in welcher das als Ketten-, Seil- oder Bandtrieb ausgebildete, eine von dem Elektromotor angetriebene Antriebswelle umlaufende Treibglied aufgenommen ist.

Der Gurtbringer gemäß der Erfindung ist durch seine Bauweise weitgehend unabhängig vom jeweiligen Fahrzeugtyp und kann auch bei viertürigen Kraftwagen angewendet werden, da er am Dachrahmen montierbar ist. Die Montage des erfindungsgemäßen Gurtbringers ist einfach, da er als komplette Baueinheit auf den Dachrahmen gesetzt werden kann und dort an leicht zugänglicher Stelle befestigt werden kann. Zur Montage des erfindungsgemäßen Gurtbringers sind nur geringe Änderungen am Fahrzeug selbst erforderlich, so daß auch ein nachträglicher Einbau bei erträglichem Aufwand ermöglicht ist. Außerdem kann der erfindungsgemäße Gurtbringer in kleiner kompakter Bauweise ausgeführt werden.

Das Treibglied ist vorzugsweise ein flexibles jedoch zugfestes Band, welches für das Mitnehmen des Gurtbandes beim
Verfahren des Mitnehmerarmes in dessen vordere Stellung
schubfest ausgebildet und/oder in der Führungsschiene
schubfest geführt ist. Die schubfeste Ausbildung und/oder
Führung des flexiblen Bandes ist wenigstens dann erforderlich, wenn das flexible Band nicht als Endlosband ausgebildet ist und die Führungsschiene für das Band von dem
Elektromotor aus nach vorn ragt, weil in diesem Fall von
dem entsprechenden Bandabschnitt der Mitnehmerarm bei seinem Ausfahren in die vordere Stellung gegen den Gurtbandzug
nach vorn geschoben werden muß. Das flexible Band kann jedoch auch als Endlosband ausgebildet sein und eine Umlenkrolle umlaufen, die am freien Ende der Führungsschiene
angeordnet ist.

Ferner ist in bevorzugter Ausgestaltung der Erfindung der
Mitnehmerarm wenigstens mit seinem die Durchlauföffnung
enthaltenden Ende bei dem Verfahren des Mitnehmerarmes
in seine vordere Stellung unter dem Gurtbandzug auslenkbar. Dadurch kann sich das die Durchlauföffnung
für das Gurtband enthaltende Ende des Mitnehmerarmes
auf den jeweiligen Verlauf des Gurtbandes ausrichten,
so daß dieses in der Durchlauföffnung nicht seitlich
umgeschlagen wird und ein möglichst geringer Widerstand
für das Vorfahren des Mitnehmerarmes aufrechterhalten
bleibt. Hierdurch kann der Elektromotor auf eine geringere Leistung ausgelegt sein und daher kleiner ausgeführt werden, was einer kleinen Gesamtbaugröße des erfindungsgemäßen Gurtbringers entgegenkommt.

Ferner wirkt in bevorzugter Weiterbildung der Erfindung
auf den Mitnehmerarm eine Feder ein, welche mittelbar oder
unmittelbar an dem Mitnehmerarm angreift und welche durch
das Verfahren des Mitnehmerarmes in dessen hintere Stellung gespannt wird. Dadurch wirkt die gespannte Feder beim Vorfahren des Mitnehmerarmes, bei welchem wegen des Gurtbandzuges der größere Kraftaufwand erforderlich ist, zusätzlich zum Elektromotor als Federmotor, wodurch der Elektromotor ebenfalls in kleinerer Bauweise ausgeführt werden kann. Beim Zurückfahren des Mitnehmerarmes hingegen, nachdem das Gurtband von dem Fahrzeuginsassen für das Anlegen des Sicherheitsgurtes abgenommen ist, gleitet das Gurtband durch die Durchlauföffnung am freien Ende des Mitnehmerarmes, so daß hierbei der Fahrwiderstand des Mitnehmerarmes kleiner ist und daher die Antriebskraft selbst eines kleinen Elektromotors für das Spannen der Feder ausreicht.

Bevorzugt ist ferner der untere Begrenzungsrand der Durchlauföffnung, über welchen das Gurtband läuft, als drehbare Rolle ausgebildet. Dadurch ist die Reibung beim Verfahren des Mitnehmerarmes in dessen vordere Stellung reduziert, so daß die Motorleistung geringer sein kann. Die Rolle ist vorzugsweise lösbar befestigt, wodurch ein einfaches Ein- und Ausbauen des Gurtbandes ermöglicht wird.

Gegebenenfalls kann an dem Gehäuse des Elektromotors ein Haltegriff für die Fondpassagiere ausgebildet werden, so daß der sonst am Dachrahmen des Kraftwagens montierte hintere Haltegriff entfallen kann.

Der Elektromotor kann für das Vorfahren des Mitnehmerarmes mit dem Gurtband mittels eines für den Fahrzeuginsassen leicht zugänglichen Druckschalters manuell oder mittels eines Türkontaktes und/oder Zünschloßkontaktes automatisch durch das Schließen der Fahrzeugtür bzw. das Betätigen des Zündschlosses einschaltbar sein. Der automatische Bewegungsablauf soll vorzugsweise nach einer Verzögerungszeit nach dem Schließen der Tür bzw. dem Einschalten der Zündung beginnen. Vorzugsweise verbleibt der Mitnehmerarm für eine mittels eines Zeitgliedes vorbestimmte Zeitspanne in seiner vorderen Stellung und fährt dann automatisch in seine hintere Ausgangsstellung zurück, falls der Gurt von den Fahrzeuginsassen nicht angelegt wird. Eine derartige Gurtbringersteuerung ist an sich bekannt (DE-OS 27 13 172).

Gemäß der Erfindung ist jedoch bevorzugt eine zusätzliche Steuerung vorgesehen, indem das Zurückfahren des Mitnehmerarmes in seine hintere Stellung durch ein Abwickeln des Gurtbandes von dessen Aufwickelrolle um ein solches Maß auslösbar ist, welches nur wenig größer als das Abwickelmaß des Gurtbandes bei in der vorderen Stellung befindlichem Mitnehmerarm ist. Dadurch wird erreicht, daß der Mitnehmerarm aus seiner vorderen Stellung unter Umgehung des vorstehend erwähnten Zeitgliedes sofort in seine hintere Ausgangsstellung zurückgefahren wird, wenn der Fahrzeuginsasse das Gurtband abnimmt und es dabei von der Aufwickelrolle um einige Zentimeter zusätzlich abwickelt. Hierdurch wird der Vorteil erreicht, daß zum Anlegen des Gurtes der beim Vorfahren des Mitnehmerarmes bereits von der Aufwickelrolle abgezogene Gurtbandabschnitt zur Verfügung steht und daher die Zugkraft, die der Fahrzeuginsasse für das Anlegen des Gurtes bis zum Einstecken der Schloßzunge des Gurtes in das am Mitteltunnel des Kraftwagens angeordnete Gurtschloß sehr gering ist. Würde nämlich der Mitnehmerarm während des Anlegens des Gurtes in seiner vorderen Stellung verbleiben, in welcher der Gurtbandabschnitt zwischen dem Umlenkbeschlag für das Gurtband und der Durchlauföffnung seitlich des Fahrzeugsitzes etwa in Kopfhöhe des Fahrzeuginsassen nach vorne verläuft, muß das Gurtband zum Anlegen des Gurtes von dem Mitnehmerarm seitlich und schräg nach unten abgezogen werden. Hierbei muß einerseits gegen die Kraft der Aufwickelfeder der Aufwickelrolle gearbeitet werden und andererseits muß die Reibung zwischen dem Gurtband und dem unteren Rand der Durchlauföffnung am Mitnehmerarm überwunden werden, wo das Gurtband dann zusätzlich umgelenkt wird.

Durch das Zurückfahren des Mitnehmerarmes hingegen gelangt dieser in eine Stellung, in welcher er mit dem die Durchlauföffnung nach unten begrenzenden Rand nahe des unteren Steges des Umlenkbeschlages für das Gurtband angeordnet ist und keine wesentliche zusätzliche Umlenkung des Gurtbandes herbeiführt. Das Zurückfahren des Mitnehmerarmes nach dem Abnehmen des Gurtes kann durch einen entsprechenden Kontakt am Gurtband oder an der Aufwickelrolle ausgelöst werden.

Die Erfindung wird anhand einer gegenwärtig bevorzugten Ausführungsform erläutert, die aus der Zeichnung wenigstens schematisch ersichtlich ist. In der Zeichnung zeigt:

Fig. 1    einen Gurtbringer gemäß der Erfindung, montiert am Dachrahmen eines Personenkraftwagens, in der Ansicht von vorn,

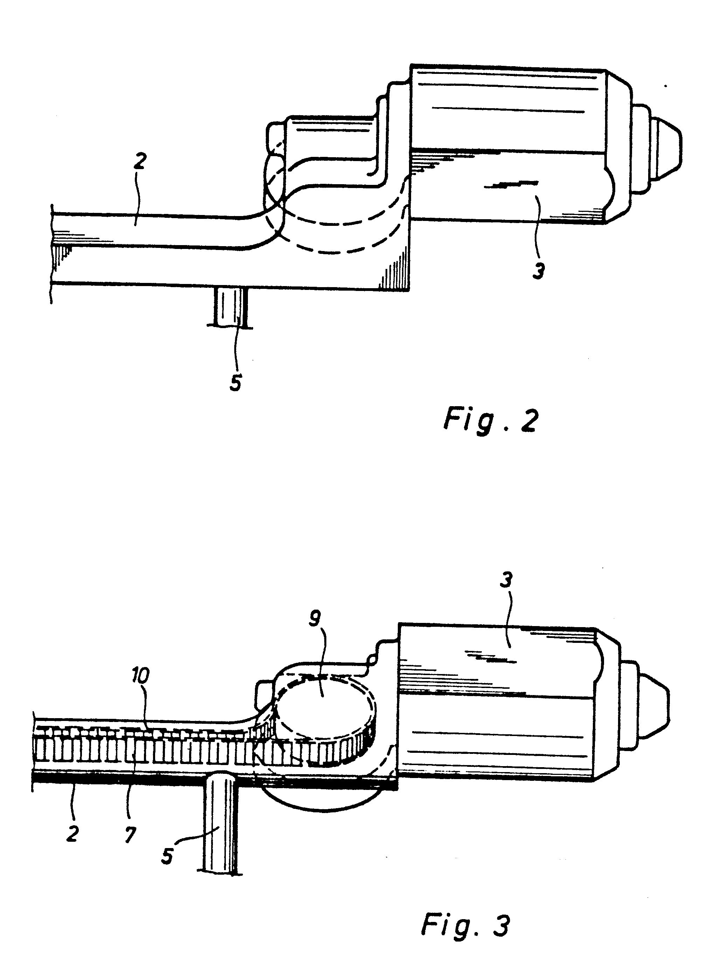

Fig. 2    den hinteren Teil des Gurtbringers aus Fig. 1 in der Draufsicht und

Fig. 3    ebenfalls den hinteren Teil des Gurtbringers aus Fig. 1 in einer Seitenansicht mit Darstellung des Treibgliedes in der Führungsschiene des Mitnehmerarmes.

Wie aus der Zeichnung ersichtlich ist der Gurtbringer als langgestreckte, selbstragende Baueinheit gestaltet, die bei der gezeigten Ausführungsform entlang des seitlichen Dachrahmens 1 eines Kraftwagens derart an den Dachrahmen 1 angeschraubt werden kann, daß der Elektromotor 3 des Gurtzubringers im Bereich hinter der B-Säule 4 des Kraftwagens angeordnet ist und die parallel zur Achse des Elektromotors 3 verlaufende, sich von diesem aus nach vorn erstreckende Führungsschiene 2 für den Gurtmitnehmerarm 5 nach vorn über die B-Säule 4 hinaus in den Bereich über der Türmitte der vorderen Seitentür des Kraftwagens hineinragt. Der Mitnehmerarm 5, der mit seinem oberen Ende in der Führungsschiene 2 verschiebbar geführt ist, ragt von der Führungsschiene 2 aus entsprechend des Verlaufs der B-Säule 4 nach unten und weist an seinem freien Ende eine als Schlitz ausgeführte Duchlauföffnung 11 für das Gurtband 6 des Sicherheitsgurtes auf. Die Umrandung der Durchlauföffnung 11 kann an geeigneter Stelle zur nachträglichen Einführung des Gurtbandes 6 ohne Demontage desselben mit einem Einführschlitz versehen sein. Der untere Begrenzungsrand der Durchlauföffnung 11 kann auch als drehbare Rolle ausgebildet sein, die zum Einlegen des Gurtbandes in die Durchlauföffnung 11 lösbar befestigt sein kann.

In der Führungsschiene 2 ist der Mitnehmerarm 5 aus einer hinteren Stellung, in welcher er in Höhe der B-Säule 4 angeordnet ist und mit seinem die Durchlauföffnung 11 begrenzenden unteren Ende etwas unterhalb des unteren Steges 12 des an der B-Säule angebrachten Umlenkbeschlages 13 für den Sicherheitsgurt 6 parallel zu diesem Steg 12 verläuft, in eine vordere Stellung verfahrbar, in welcher sein unteres Ende etwa in Längsmitte der Vordertür des Kraftwagens und etwa in Kopfhöhe des auf dem Vordersitz sitzenden Fahrzeuginsassen angeordnet ist.

Für das Verfahren des Mitnehmerarmes 5 zwischen seiner vorderen und seiner hinteren Stellung ist der Mitnehmerarm 5 von dem Elektromotor 3 über ein als Schneckengetriebe ausgebildetes Untersetzungsgetriebe 8, eine Antriebsrolle 9, deren Achse windschief senkrecht zur Achse des Elektromotors 3 verläuft, und ein die Antriebsrolle 9 umlaufendes flexibles Band 7 angetrieben, welches als Zahnriemen ausgebildet ist und mit seinen Zähnen in die an der Antriebsrolle 9 ausgebildete Außenverzahnung eingreift. Das flexible Band 7 umläuft mit seinem mittleren Bereich die scheibenförmige Antriebsrolle 9 und ist mit seinen von der Antriebsrolle 9 wegverlaufenden freien Bandabschnitten in der H-förmigen Führung der Führungsschiene 2 schubfest derart geführt, daß der Mitnehmerarm 5 beim Vorfahren von dem unteren Bandabschnitt des flexiblen Bandes 7 in der Führungsschiene vorgeschoben wird und beim Zurückfahren des Mitnehmerarmes 5 der Leerabschnitt 10 des Bandes 7 in die Führungsschiene 2 hineingeschoben wird. Entlang des Antriebsrades 9 ist das Band 7 derart geführt, daß es stets mit seiner Verzahnung in Eingriff mit dem Antriebsrad 9 verbleibt. Es ist jedoch auch möglich, am vorderen freien Ende der Führungsschiene eine Umlenkrolle auszubilden (nicht gezeigt) und das Band 7 als die Umlenkrolle umlaufendes Endlosband auszuführen.

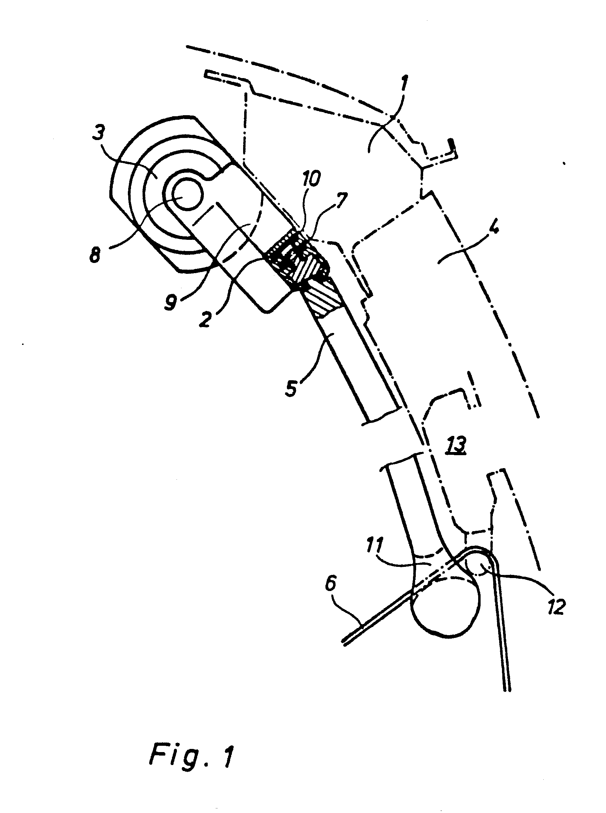

Der Mitnehmerarm 5 ist, wie aus Fig. 1 ersichtlich, mit dem unteren Bandabschnitt des flexiblen Bandes 7 vernietet oder er steht mit dem unteren Bandabschnitt auf andere Weise in Eingriff.

Im Betrieb wird der Gurtbringer aus seiner hinteren Stellung, ausgelöst beispielsweise durch einen elektrischen Türkontakt und/oder einen Zündschloßkontakt (nicht gezeigt) beim Schließen der Fahrzeugtür ggf. mit vorbestimmter Zeitverzögerung bzw. beim Betätigen des Zündschlüssels in seine vordere Stellung verfahren, in welcher das mitgenommene Gurtband 6 für den auf dem Vordersitz des Kraftwagens sitzenden Insassen in einer griffgünstigen Position angeordnet ist, so daß der Insasse das Gurtband 6 an dessen Schloßzunge (nicht gezeigt) ergreifen kann und die Schloßzunge für das Anlegen des Gurtes in das Gurtschloß (nicht gezeigt) einstecken kann. Der Mitnehmerarm 5 kann insgesamt oder wenigstens im Bereich seines die Durchlauföffnung 4 für das Gurtband 6 aufweisenden freien Endes derart begrenzt flexibel ausgebildet sein, daß er einerseits das Gurtband 6 beim Vorfahren in dessen vordere Stellung mitschleppt und sich andererseits sein freies Ende unter dem Gurtbandzug derart auslenken kann, daß das Gurtband 6 beim Vorfahren des Mitnehmerarmes 5 nicht allzusehr seitlich abgeknickt wird.

Bayerische Motoren Werke AG, München

Gurtbringer in einem Kraftwagen

Ansprüche

1. Gurtbringer in einem Kraftwagen zur Zuführung des Sicherheitsgurtes in eine griffgünstige Position, mit einem Mitnehmerarm (5), der an seinem freien Ende eine Durchlauföffnung (11) für das Gurtband (6) aufweist und der mittels eines Elektromotors (3) über ein mit diesem und dem Mitnehmerarm (5) gekuppeltes Treibglied (7) aus einer hinteren Stellung unter Mitführung des Gurtbandes (6) in eine vordere Stellung verfahrbar ist, dadurch gekennzeichnet, daß der Gurtbringer als Baueinheit am Dachrahmen (1) des Kraftwagens montiert ist und eine von dem Elektromotor (3) in Fahrzeuglängsrichtung abragende Führungsschiene (2) aufweist, in welcher der nach unten ragende Mitnehmerarm (5) mit seinem der Durchlauföffnung (11) abgewendeten Ende geführt ist und in welcher das als Ketten-, Seil- oder Bandtrieb ausgebildete, eine von dem Elektromotor (3) angetriebene Antriebsrolle (9) umlaufende Treibglied (7) aufgenommen ist.

2. Gurtbringer nach Anspruch 1, dadurch gekennzeichnet, daß das Treibglied (7) ein flexibles zugfestes Band ist, welches für das Mitnehmen des Gurtbandes (6) beim Verfahren des Mitnehmerarmes (5) schubfest ausgebildet und/oder in der Führungsschiene (2) schubfest geführt ist.

3. Gurtbringer nach Anspruch 2, dadurch gekennzeichnet, daß das Band als Endlosband ausgebildet ist und eine Umlenkrolle umläuft, die am freien Ende der Führungsschiene (2) angeordnet ist.

4. Gurtbringer nach einem der Ansprüche 1 bis 3, dadurch gekennzeichnet, daß der Mitnehmerarm (5) wenigstens mit seinem die Durchlauföffnung (11) enthaltenden Ende bei dem Verfahren des Mitnehmerarmes (5) in seine vordere Stellung unter dem Gurtbandzug auslenkbar ist.

5. Gurtbringer nach einem der Ansprüche 1 bis 4, dadurch gekennzeichnet, daß auf den Mitnehmerarm (5) mittelbar oder unmittelbar eine Feder wirkt, welche durch das Verfahren des Mitnehmerarmes (5) in dessen hintere Stellung gespannt wird.

6. Gurtbringer nach einem der Ansprüche 1 bis 5, dadurch gekennzeichnet, daß der untere Begrenzungsrand der Durchlauföffnung (1) als drehbare Rolle ausgebildet ist.

7. Gurtbringer nach Anspruch 6, dadurch gekennzeichnet, daß die Rolle an dem Mitnehmerarm (5) lösbar befestigt ist.

8. Gurtbringer nach einem der Ansprüche 1 bis 7, dadurch gekennzeichnet, daß an dem Gehäuse des Elektromotors (3) ein Haltegriff für die Fondpassagiere des Kraftwagens ausgebildet ist.

9. Gurtbringer nach einem der Ansprüche 1 bis 8, dadurch gekennzeichnet, daß das Zurückfahren des Mitnehmerarmes (5) in seine hintere Stellung durch ein Abwickeln des Gurtbandes (6) von dessen Aufwickelrolle um ein solches Maß auslösbar ist, welches nur wenig größer ist als das Abwickelmaß des Gurtbandes (6) bei in der vorderen Stellung befindlichem Mitnehmerarm (5).

0172453

Fig. 1

**2**

**3**

**5**

*Fig. 2*

**9**

**10**

**3**

**2**

**7**

**5**

*Fig. 3*